# EUROPEAN PATENT SPECIFICATION

(11) **EP 0 426 011 B1**
(45) Date of publication and mention of the grant of the patent: **01.02.1995**
(21) Application number: 90120497.4
(22) Date of filing: 25.10.1990
(51) Int. Cl.: G01J 3/45

(54) **Two-beam interferometer for use in fourier transform spectrometer and driving device for movable flat mirror of same**
Zweistrahl-Interferometer für ein Fourier-Spektrometer sowie Antriebsvorrichtung für einen beweglichen Planspiegel dafür
Interféromètre à deux faisceaux pour un spectromètre à transformée de Fourier et dispositif de commande pour un miroir plan pivotant

(30) Priority: 28.10.1989 JP 126304/89 U; 30.10.1989 JP 282676/89
(43) Date of publication of application: 08.05.1991
(73) Proprietor: HORIBA, LTD., Minami-ku Kyoto (JP)
(72) Inventor: Ukon, Juichiro, Ibaraki-city, Osaka (JP)
(74) Representative: TER MEER STEINMEISTER & PARTNER GbR

(56) References cited:
- WO-A-85/04712
- DE-A- 3 736 694
- GB-A- 2 162 334

## Description

### BACKGROUND OF THE INVENTION

### Field of the Invention

The present invention relates to a two or bi-beam interferometer used in a Fourier transform spectrometer and a driving device for moving a movable flat mirror of the same.

### Description of the Prior Art

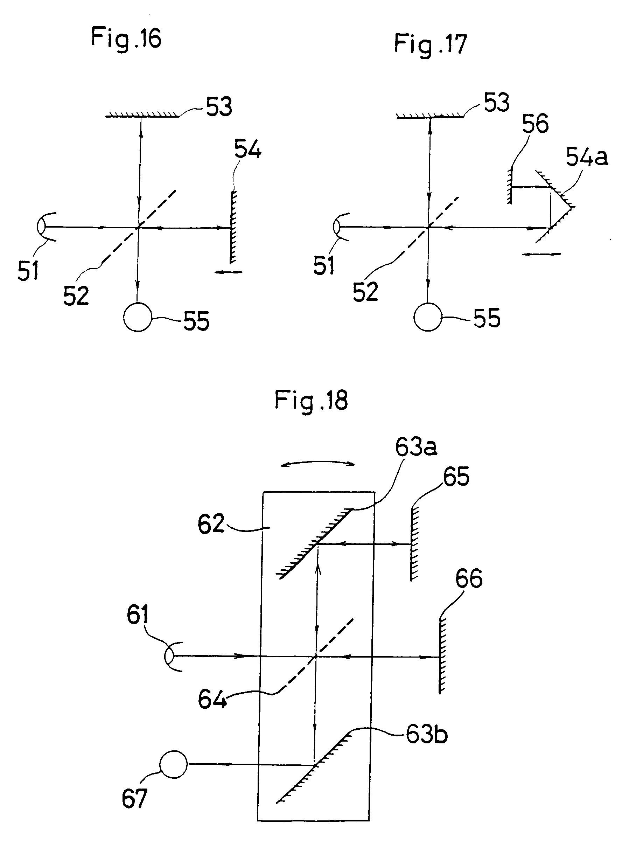

A two or bi-beam interferometer for use in a Fourier transform spectrometer shown in for example Fig. 16 is already known.

Referring to Fig. 16, reference numeral 51 designates a light source, reference numeral 52 designates a beam splitter, reference numeral 53 designates a fixed flat mirror upon which a reflected beam from said beam splitter 52 is incident, and reference numeral 54 designates a movable flat mirror, upon which a transmitted beam from the beam splitter 52 is incident, said movable flat mirror 54 being linearly reciprocated in parallel to an optical axis of said transmitted beam. Reference numeral 55 designates a detector.

Said fixed flat mirror 53 and the movable flat mirror 54 are arranged so that an incident angle of each beam incident thereupon may be 0° to make an optical path of said incident beam almost identical with an optical path of an emitted beam, whereby making the respective beams reflected by the fixed flat mirror 53 and the movable flat mirror 54 incident upon the beam splitter 52 again.

With this interferometer, the movable flat mirror 54 is linearly moved in parallel to said optical axis of the beam incident thereupon to change an optical path length of the transmitted beam from the beam splitter 52, whereby producing an optical path difference between the incident beam and the reflected beam having a constant optical path length to rejoin these beams by means of the beam splitter 52 and thus make an interference occur.

In addition, since it is necessary that an angle of inclination of the movable flat mirror 54 is remarkably reduced to an extent of 1" or less in order to make the optical axis of the beam incident upon the movable flat mirror 54 almost parallel to the optical axis of the beam emitted from the movable flat mirror 54, a highly accurate air bearing or a parallelogramic linking mechanism has been used in a driving device (not shown) for linearly moving the movable flat mirror 54. The driving device disclosed in for example Japanese Patent Application Laid-Open No. Sho 63-501174 is already known.

In the driving device disclosed in this publication, a pair of parallel links are pivotally mounted on a fixed member at end portions thereof, a movable flat mirror of said two-beam interferometer being mounted on a swinging member pivotally mounted on other ends of these parallel links in a constructed manner, and this swinging member being reciprocated by means of a linear motor to reciprocate said movable flat mirror.

Also an interferometer shown in Fig. 17 has been known. Referring to Fig. 17, reference numeral 54a designates a movable mirror, upon which a transmitted beam from a beam splitter 52 is incident, composed of a cube corner mirror comprising three pieces of flat mirror adjacent vertically to each other and linearly reciprocating in parallel to an optical axis of said incident transmitted beam. Reference numeral 56 designates a fixed flat mirror for returning a beam incident thereupon from said movable mirror 54a to the movable mirror 54a. Since other constructions are same as in the conventional example shown in Fig. 16, they were designated by the same reference numerals.

Also in this interferometer, the movable mirror 54a is linearly moved to produce a difference between the reflected beam and the transmitted beam from said beam splitter 52 in optical path length and make them incident upon the beam splitter 52 again, whereby making an interference occur.

An interferometer shown in Fig. 18 has been known as an interferometer in which a support and guide mechanism for linearly moving the movable flat mirror or the movable mirror in the respective interferometers shown in said Figs. 16 and 17 has been made unnecessary.

Referring to Fig. 18, reference numeral 61 designates a light source and reference numeral 62 designates a swinging plate provided with a pair of movable flat mirrors 63a, 63b fixedly standing therefrom in parallel and oppositely under the condition of two opposite sides of a parallelogram and a beam splitter 64 fixedly standing therefrom in parallel to said movable flat mirrors 63a, 63b between the movable flat mirrors 63a, 63b.

Said swinging plate 62 is adapted to be rotatably supported by means of a supporting shaft (not shown) and swung, as shown by an arrow, and an axis shaft line of said supporting shaft is arranged in parallel to a surface of the movable flat mirrors 63a, 63b. Reference numeral 65 designates a fixed flat mirror for reflecting a reflected beam, which is incident thereupon from a beam splitter 64 through the movable flat mirror 63a, through the same optical path to make said reflected beam incident upon the movable flat mirror 63a again, reference numeral 66 designates a fixed flat mirror for reflecting a transmitted beam, which is incident thereupon from said beam splitter 64, through the same optical path, and reference numeral 67 designates a detector.

With this interferometer, a reflected beam from the beam splitter 64 is reflected by the movable flat mirror 63a and said flat mirror 65 to be incident upon the beam splitter 64 again and a transmitted beam from the beam splitter 64 is reflected by said flat mirror 66 to be incident upon the beam splitter 64 again but the movable flat mirrors 63a, 63b and the splitter 64 are rotatably swung by means of the swinging plate 62 at the same time.

Accordingly, an optical path length from said light source 61 to the flat mirror 65 of the reflected beam is changed to produce a difference between said optical path length of the reflected beam and an optical path length of said transmitted beam having the constant optical path length, so that an interference occurs when they are incident upon the beam splitter 64 again.

In the above described conventional interferometer, it is required for the interferometer shown in Fig. 16 to remarkably reduce the angle of inclination of the movable mirror 54 to an extent of about 1". Consequently, a highly accurate air bearing or a parallelogramic link mechanism has been used as the driving device for the movable flat mirror 54.

However, if the air bearing is used, it is necessary to always supply air, so that problems occur in that the operation is complicated and the apparatus is expensive. In addition, it is necessary for the parallelogramic link mechanism to make lengths of the respective opposite sides completely equal to each other, so that a remarkably high dimensional accuracy is required for the respective links and a difficulty occurs in that also an assembly requires a high accuracy. Furthermore, since the links are expensive, a problem occurs in that a cost of the interferometer is increased. In particular, in the art, in which the movable flat mirror 54 is driven by means of a linear motor, as disclosed in said Japanese Patent Application Laid-Open No. Sho 63-501174, problems have occurred in that not only a consumption volume of electric power is increased but also a space required for the installation of a driving mechanism is increased.

Moreover, since every driving device requires a high accuracy, a problem has occurred also in that for example a slight deformation of the respective parts resulting from a temperature-change and the like give an influence upon the support of the movable flat mirror 54 to change the angle of inclination of the movable flat mirror 54, whereby increasing a shift between a beam incident upon the movable flat mirror 54 and a beam emitted from the movable flat mirror 54.

Besides, since the reflected beam and the transmitted beam from the beam splitter 52 pass through different spaces, the reflected beam and the transmitted beam pass spaces different in turbulent condition of air. Accordingly, a difference is produced between a wave surface of the reflected beam and that of the transmitted beam in turbulence on account of an influence by a turbulence of air, so that when the reflected beam and the transmitted beam are rejoined together at the beam splitter 52, there is also a great possibility that the remaining difference in turbulence appears as a noise on an interferogram by the Fourier transform spectrometer.

In the conventional example shown in Fig. 17, since a cube corner mirror is used as the movable mirror 54a, an angle formed between the incident beam and the emitted beam by the inclination of said cube corner mirror produced when it is linearly moved is reduced and thus the accuracy required for a driving device for driving the movable mirror is lowered in comparison with that required for the interferometer shown in Fig. 16, so that said problem about the accuracy of the driving device is relatively reduced.

However, a remarkably high accuracy is contrarily required for the cube corner mirror composing the movable mirror 54a. That is to say, it is necessary for three pieces of flat mirror to be adjacent to each other while maintaining a completely vertical relation among themselves and a permissible value of a difference in angle in said vertical relation is about 1" or less. Accordingly, it is difficult to obtain the highly accurate cube corner mirror and even though the highly accurate cube corner mirror can be obtained, it is expensive, so that a problem has occurred in that a cost of an interferometer is remarkably increased.

Although a roof-shaped mirror comprising two pieces of flat mirror adjacent to each other vertically acts in the same manner as the cube corner mirror, also it has a difficulty in the highly accurate regulation.

In addition, since the reflected beam and the transmitted beam from the beam splitter 52 pass through different spaces, also a problem of a noise resulting from a difference of a turbulence of air in the respective spaces occurs in the same manner as in said conventional interferometer shown in Fig. 16.

In said interferometer shown in Fig. 18, movable flat mirrors 63a, 63b and a beam splitter 64 are rotatably swung by means of a swinging plate 62 and an improvement of a rotating and supporting mechanism of a shaft, with which said swinging plate 62 is provided, in accuracy is easier than an improvement of the driving device in accuracy in the linear movement in the interferometers shown in Figs. 16 and 17 and thus a cost of the supporting mechanism for the driving device can be reduced and also the problem resulting from the driving device for the linear movement can be almost solved.

However, in this interferometer said movable flat mirrors 63a, 63b and said beam splitter 64 are rotatably swung by means of said swinging plate 62 to change merely an optical path length of a reflected beam, so that a problem occurs in that it is difficult to increase a difference between said reflected beam and a transmitted beam in optical path length. In addition, since the reflected beam and said transmitted beam pass through different spaces, a problem of a noise resulting from a difference of air in said respective spaces in turbulence is produced in the same manner as in said conventional interferometers shown in Figs. 16 and 17.

In this interferometer said swinging plate 62 is rotatably swung by means of a servomotor, so that problems occur in that not only the consumption of electric power is increased but also a space required for an installation of a driving device is increased.

An interferometer comprising the features of the preamble of claim 1 is known from the document DE-A-37 36 694. The swinging member there is driven by two electromagnets. The beam reflected by the beam splitter and the beam transmitted through the beam splitter both propagate through different spaces. Due to different conditions concerning the turbulency of air in the different spaces, noise is produced in the interferogram.

### SUMMARY OF THE INVENTION

It is a first object of the present invention to provide a two-beam interferometer having good noise properties.

It is another object of the invention to provide a driving device for a swinging member in a two-beam interferometer, which driving device is capable of reducing the consumption of electric power and a space for installation of the device.

According to a first aspect of the invention, a two-beam interferometer is provided which is defined by the teaching of appended claim 1. According to a second aspect of this invention, a driving device is provided being defined by the teaching of appended claim 8.

In the two-beam interferometer of the invention, the reflected beam and the transmitted beam from the beam splitter pass through almost the same space between the movable flat mirrors. Accordingly, the influences of turbulent air are almost the same on both beams, whereby noise in the interferogram is considerably reduced.

According to a preferred embodiment, the both movable flat mirrors have chevron form, whereby the planes of the flat mirrors extend parallel to the rotational axis of the swinging member.

According to a further improvement, a third and a fourth fixed mirror are provided to double the propagation path of the beams within the interferometer.

The driving device of this invention uses a piezoelectric ceramics instead of a servomotor as in the prior art. The piezoelectric ceramics requires little space, and it has low power consumption. According to a preferred embodiment, the piezoelectric ceramics drives a first lever, and this first lever drives a second lever which rotates the swinging member. By this arrangement, the rotating angle of the swinging member becomes larger than the rotation angle of the first lever. For example, a PZT element is used as the piezoelectric ceramics in said driving device.

A plate spring may be used as an elastically deformable sheet-like piece connecting the piezoelectric ceramics and the first lever and/or the first and the second lever.

### BRIEF DESCRIPTION OF THE DRAWINGS

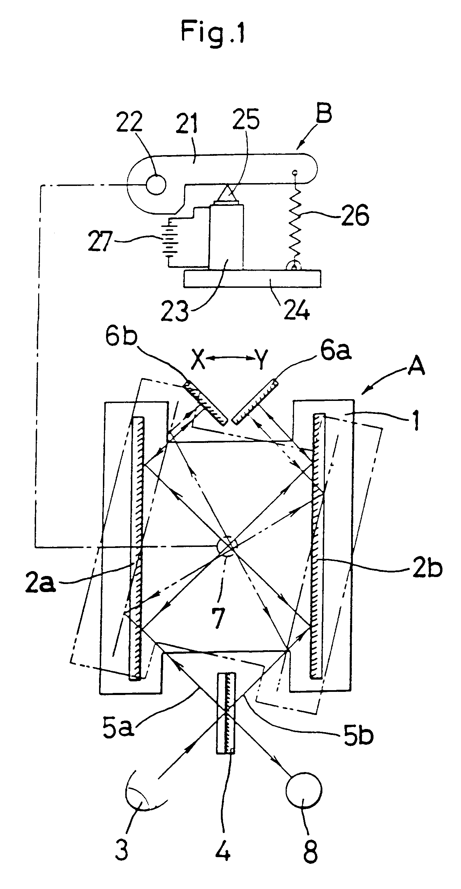

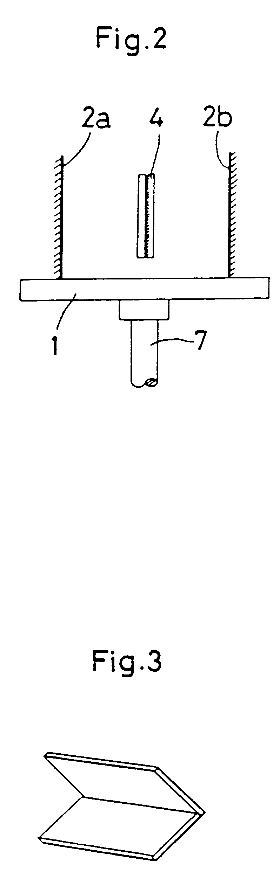

A first preferred embodiment of the present invention is shown in Figs. 1 and 2, in which
Fig. 1 is a plan view; and
Fig. 2 is a partially omitted front view.
Fig. 3 is a perspective view showing one example of a different fixed mirror.
Fig. 4 is a plan view showing a second preferred embodiment.
Fig. 5 is a plan view showing a third preferred embodiment.

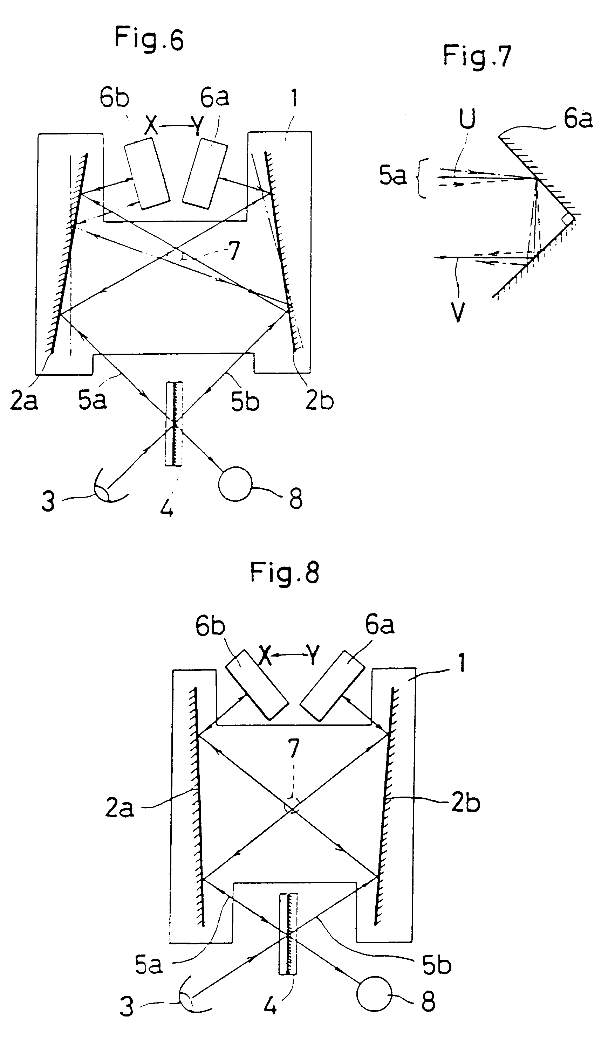

A fourth preferred embodiment of the present invention is shown in Figs. 6 and 7, in which
Fig. 6 is a plan view; and
Fig. 7 is a side view showing one example of a fixed mirror.
Fig. 8 is a plan view showing a fifth preferred embodiment.

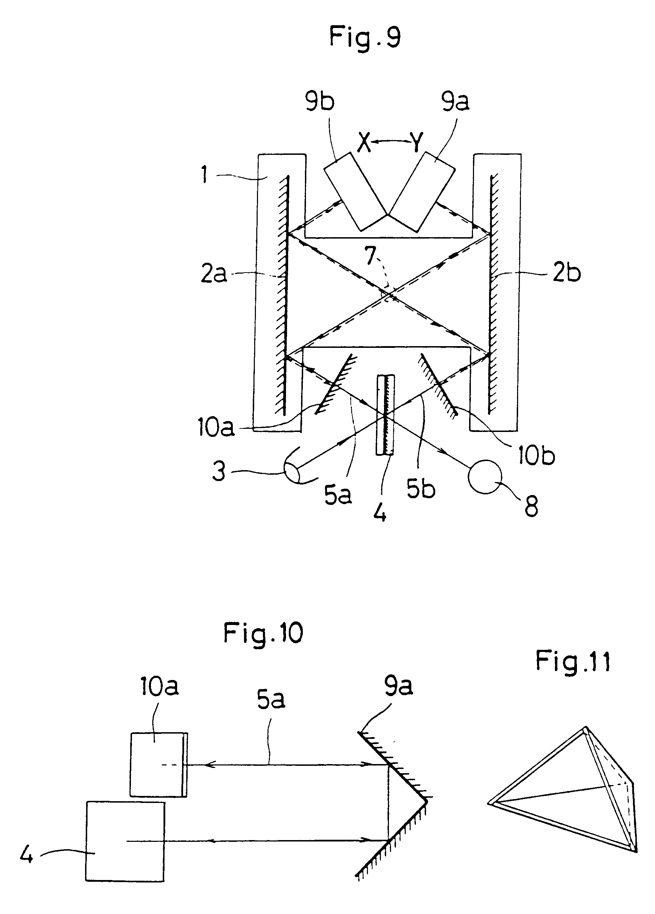

A sixth preferred embodiment of the present invention is shown in Figs. 9 and 10, in which
Fig. 9 is a plan view; and
Fig. 10 is a diagram showing a progressive condition of a reflected beam.

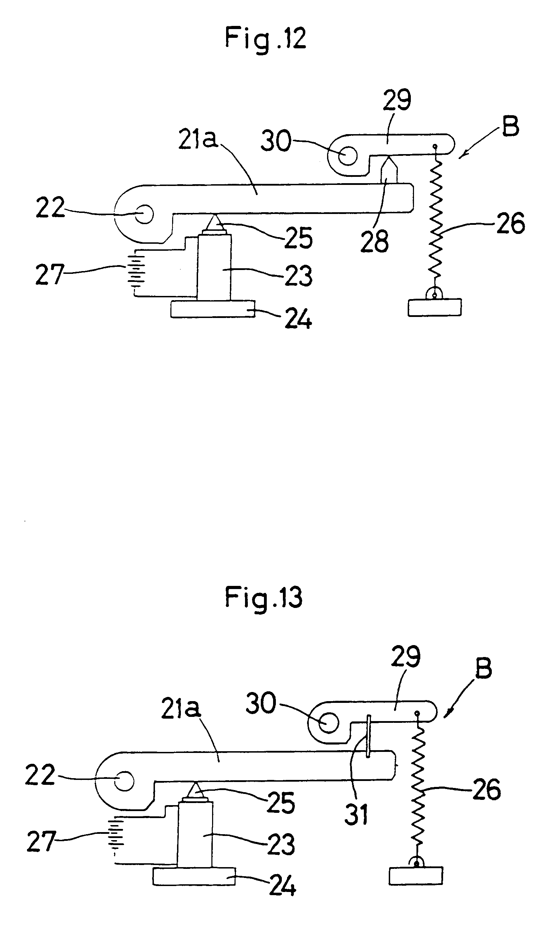

Fig. 11 is a perspective view showing one example of a different fixed mirror.
Fig. 12 is a plan view showing a seventh preferred embodiment.
Fig. 13 is a plan view showing an eighth preferred embodiment.

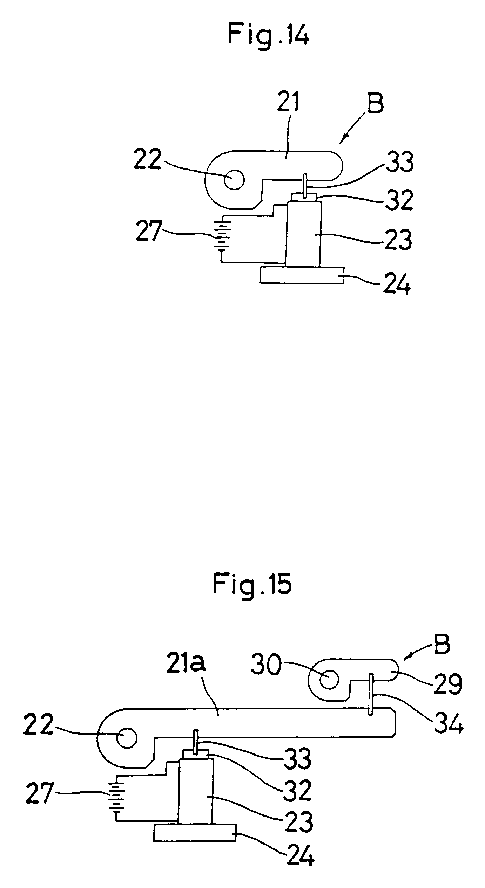

Fig. 14 is a plan view showing a ninth preferred embodiment.
Fig. 15 is a plan view showing a tenth preferred embodiment.
Fig. 16 to 18 is a plan view showing the different conventional example, respectively.

### DESCRIPTION OF THE PREFERRED EMBODIMENTS

The preferred embodiments of the present invention will be below described with reference to the drawings.

Figs. 1 and 2 correspond to said first embodiment and said fifth embodiment.

Referring now to Figs. 1 and 2, A designates a body of a two-beam interferometer and B designates a driving device for movable flat mirrors in said two-beam interferometer.

At first, a construction of said body of a two-beam interferometer A is described. Reference numeral 1 designates a swinging member formed of a plate material and the like and provided with a pair of movable flat mirrors 2a, 2b fixedly standing thereon oppositely in parallel at an interval. Reference numeral 3 designates a light source, reference numeral 4 designates a beam splitter fixedly positioned for making beams from said light source 3 incident upon said movable flat mirrors 2a, 2b, reference numeral 5a designates a reflected beam from said beam splitter 4, and reference numeral 5b designates a transmitted beam from the beam splitter 4.

Reference numerals 6a, 6b designate fixed mirrors composed of one piece of flat mirror, upon which said reflected beam 5a and said transmitted beam 5b are to be incident from the movable flat mirrors 2a, 2b, respectively. Said fixed mirrors 6a, 6b are arranged so that incident angles of the incident reflected beam 5a and incident transmitted beam 5b may be 0° and optical axes of the respective beams incident upon and emitted from the fixed mirrors 6a, 6b may be almost parallel to each other. Accordingly, the reflected beam 5a and the transmitted beam 5b emitted from the fixed mirrors 6a, 6b are reflected by the movable flat mirrors 2a, 2b to be incident upon the beam splitter 4 again. Reference numeral 7 designates a shaft standing on said swinging member 1 in the same direction as the direction in which the movable flat mirrors 2a, 2b stand and reference numeral 8 designates a detector.

Next, a construction of said driving device B is described. Referring to Fig. 1, reference numeral 21 designates a lever fixedly mounted on a shaft 22 at an end portion thereof and adapted to be rotated together with said shaft 22. Reference numeral 23 designates a piezoelectric ceramics fixedly mounted on a base 24. Upon applying a voltage to said piezoelectric ceramics 23, it is lengthened in one direction but its quantity dislocated is small to an extent of 1 nm/mm or less, so that a large number of piezoelectric ceramics 23 are used in pile. Reference numeral 25 designates a support member fixedly mounted on a top portion of the piezoelectric ceramics 23 with a rounded pointed end which is engaged with one side in a rotating direction of said lever 21 to support the lever 21. A pointed end shape of said support member 25 can be optionally selected. That is to say, a linear-, a point-like, a curved shape and the like may be used. It is sufficient that the dislocation of the lever 21 relative to the support member 25 can be smoothly conducted when the piezoelectric ceramics 23 is extended and contracted under the condition that it goes straight on to rotate the lever 21.

Reference numeral 26 designates a spring as energizing means installed between the lever 21 and said base 24 for energizing the lever 21 toward the piezoelectric ceramics 23. Reference numeral 27 designates a power source connected with the piezoelectric ceramics 23.

And, said shaft 7 of the swinging member 1 is directly or indirectly connected with said shaft 22 of the driving device B to rotate the movable flat mirrors 2a, 2b together with the swinging member 1 through the shaft 7 by a reciprocal rotation of the shaft 22, as shown by an arrow X-Y.

When the swinging member 1 of the two-beam interferometer A is to be rotatably swung by means of the driving device B, the piezoelectric ceramics 23 is extended and contracted by applying the voltage thereto and removing the voltage therefrom to reciprocally rotate the lever 21 by a going-straight on force thereof and a force of said spring 26. Thereupon, the lever 21 and the shaft 22 fixedly mounted on the lever 21 are reciprocally rotated together to rotate the shaft 7 and thus the movable flat mirrors 2a, 2b are rotatably swung together with the swinging member 1.

On the other hand, in the two-beam interferometer A, as above described, the movable flat mirrors 2a, 2b are rotatably swung to make a beam incident upon the beam splitter 4 from the light source 3, the reflected beam 5a from the beam splitter 4 being reflected by the movable flat mirrors 2a, 2b in this order to be incident upon the fixed mirror 6a and emitted from the fixed mirror 6a through an optical path almost parallel to an incident optical path, and the beam 5a reflected by the mirror 6a being reflected by the movable flat mirrors 2b, 2a in this order to be incident upon the beam splitter 4 again.

On the other hand, the transmitted beam 5b from the beam splitter 4 is reflected by the movable flat mirrors 2b, 2a in this order to be incident upon the fixed flat mirror 6b. Also the transmitted beam 5b is emitted from the fixed mirror 6b through an optical path almost parallel to an incident optical path and reflected by the movable flat mirrors 2a, 2b in this order to be incident upon the beam splitter 4 again.

And, as to an optical path length between the beam splitter 4 and the fixed flat mirrors 6a, 6b in the case where for example the movable flat mirrors 2a, 2b are swung under the condition shown by a chain line (in a direction Y), that of the reflected beam 5a is lengthened and that of the transmitted beam 5b is shortened, whereby a great difference is produced between the optical path length of the reflected beam 5a and that of the transmitted beam 5b.

In addition, in the case where the movable flat mirrors 2a, 2b are rotatably swung in a direction opposite to that shown by said chain line (in a direction X), the optical path length of the reflected beam 5a is shortened and that of the transmitted beam 5b is lengthened.

Accordingly, when the reflected beam 5a and the transmitted beam 5b different in optical path length are incident upon the beam splitter 4 again to be joined together, an interference is produced. The joined and interfered beam is converted into a voltage signal in said detector 8.

Since the movable flat mirrors 2a, 2b are rotatably swung at the same time in the above described manner, the respective optical path lengths of the reflected beam 5a and the transmitted beam 5b are simultaneously lengthened or shortened in an opposite relation depending upon the swinging direction of the movable flat mirrors 2a, 2b. Accordingly, said difference in optical path length becomes 2 times that in said conventional interferometer shown in Fig. 18.

In addition, the reflected beam 5a and the transmitted beam 5b pass through an almost same space between the movable flat mirrors 2a, 2b fixedly and oppositely standing. That is to say, even though the reflected beam 5a and the transmitted beam 5b pass through a place, where a turbulence occurs in air, the reflected beam 5a and the transmitted beam 5b simultaneously pass through air almost same in turbulent condition, so that a turbulence produced on wave surfaces of the reflected beam 5a and the transmitted beam 5b resulting from said turbulence of air becomes almost equal.

Accordingly, when the reflected beam 5a and the transmitted beam 5b are incident upon the beam splitter 4 again to be joined together, the turbulences of said wave surfaces thereof are almost perfectly negated to each other, so that an appearance of a partially remained turbulence of the wave surfaces as noises on an interferogram by the Fourier transform spectrometer can be almost prevented.

Besides, it has been known that if a swinging member 1 is provided with a pair of movable flat mirrors 2a, 2b fixedly standing thereon oppositely in parallel, as in the interferometer according to the first preferred embodiment, and for example a beam incident upon said movable flat mirror 2a is incident upon and emitted from said movable flat mirror 2b, an optical axis of the emitted beam becomes always parallel regardless of a swinging angle of said swinging member 1 also in the case where a shaft 7 of the swinging member 1 is shifted in a radial direction on account of the shaking and the like.

Accordingly, in this interferometer, the reflected beam 5a and the transmitted beam 5b are reflected by the rotatably swinging movable flat mirrors 2a, 2b and the fixedly arranged fixed mirrors 6a, 6b in turn to produce the great difference therebetween in optical path length and then be surely incident upon the beam splitter 4 again, whereby being capable of producing an interference.

Moreover, since it is obvious from the above description that the reflected beam 5a and the transmitted beam 5b can be surely incident upon the beam splitter 4 again even though the shaft 7 is moved in the radial direction by the shaking and the like resulting from the external vibration to this interferometer, the interference between the reflected beam 5a and the transmitted beam 5b is not influenced by the external vibration and thus the interferometer can be used at an almost optional place. In addition, since it is unnecessary to heighten the accuracy of the support mechanism for the shaft 7, the production and assembly of the support mechanism for the shaft 7 are easy and thus the cost can be easily reduced.

Although the respective fixed mirrors 6a, 6b are each composed of one piece of flat mirror in this preferred embodiment, also a roof-shaped mirror, which comprises two pieces of flat mirror adjacent to each other vertically as shown in Fig. 3, can be used. And, the shaft 7 is arranged at the almost central position of the swinging member 1 but the position of the shaft 7 is optional.

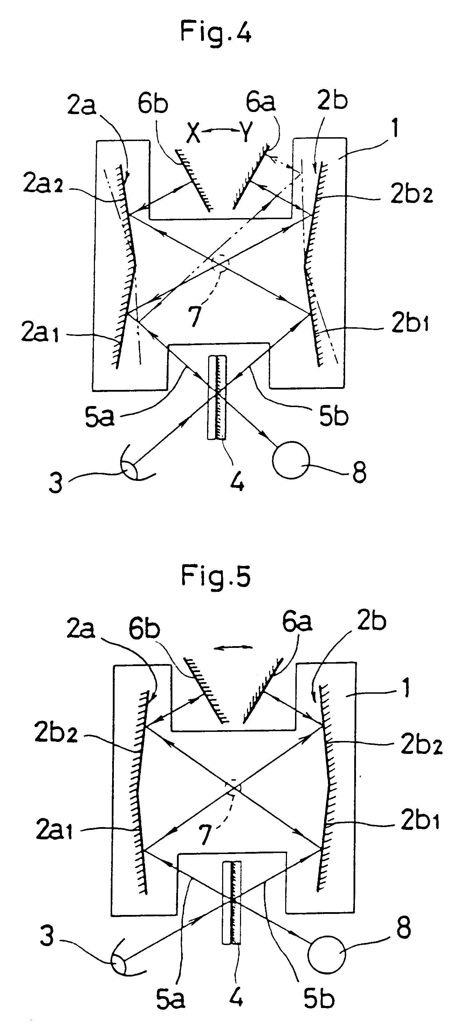

Fig. 4 shows a second preferred embodiment of the invention.

Referring to Fig. 4, reference numeral 1 designates a swinging member provided with a pair of movable flat mirrors 2a, 2b fixedly standing thereon oppositely at an interval. And, said movable flat mirror 2a and said movable flat mirror 2b are composed of flat mirrors 2a₁, 2a₂ and flat mirrors 2b₁, 2b₂ in a chevron shape, respectively, and these movable flat mirrors 2a, 2b are arranged so that an interval between both end sides thereof may be larger than that between central sides thereof. Further, said flat mirrors 2a₁, 2b₂ and said flat mirrors 2b₁, 2a₂ having the same inclined direction are arranged in parallel, respectively.

Reference numeral 3 designates a light source, reference numeral 4 designates a fixedly positioned beam splitter for making a beam from said light source 3 incident upon the movable flat mirrors 2a₁, 2b₁, respectively, reference numeral 5a designates a reflected beam from said beam splitter 4, and reference numeral 5b designates a transmitted beam from the beam splitter 4.

Reference numeral 6a, 6b designate fixed mirrors, upon which said reflected beam 5a and said transmitted beam 5b are incident from the flat mirrors 2b₂, 2a₂ of the movable flat mirrors 2b, 2a, respectively, and, from which the respective beams are returned to the flat mirror 2b₂, 2a₂, respectively. Said fixed mirrors 6a, 6b each are composed of one piece of flat mirror. Reference numeral 7 designates a shaft provided in said swinging member 1 so that an axis shaft line thereof may be arranged in the same direction as that, in which the movable flat mirror 2a stands, in parallel to a surface of the movable flat mirror 2a.

Also in this interferometer, a beam from the light source 3 is incident upon the beam splitter 4 and the reflected beam 5a reflected by the beam splitter 4 is reflected by the movable flat mirrors 2a, 2b in this order to be incident upon and then emitted from the fixed mirror 6a followed by being reflected by the movable flat mirrors 2b, 2a in this order and then being incident upon the beam splitter 4 again.

The transmitted beam 5b from the beam splitter 4 is reflected by the movable flat mirrors 2b, 2a in this order to be incident upon and then emitted from the fixed mirror 6b followed by being reflected by the movable flat mirrors 2a, 2b in this order and then being incident upon the beam splitter 4 again. Thereupon, the incident transmitted beam 5b is joined together with the reflected beam 5a to produce the interference.

On the other hand, since the movable flat mirrors 2a, 2b are rotatably swung by the rotatable swing of the swinging member 1, as shown by an arrow X↔Y, the respective optical path lengths of the reflected beam 5a and the transmitted beam 5b are lengthened or shortened at the same time in an opposite relation depending upon the swinging direction of the swinging member 1, as shown by a full line and a chain line, to increase a difference in optical path length.

In addition, it has been known when two pieces of mirror fixedly stand oppositely in parallel, as in this second preferred embodiment, that in the case where said respective mirrors are rotatably swung by means of a shaft, of which axis shaft line is parallel to a surface thereof, and a beam incident upon one mirror is incident upon and emitted from the other mirror, an optical axis of the emitted beam is always parallel to that of a beam emitted from a beam splitter regardless of said swinging angle.

Accordingly, also in this interferometer, the reflected beam 5a and the transmitted beam 5b emitted from the beam splitter 4 are reflected by the rotatably swinging movable flat mirrors 2a, 2b and the fixedly arranged fixed mirrors 6a, 6b in this order to produce a great difference between them in optical path length and surely make them jointly incident upon the beam splitter 4 again, whereby being capable of producing an interference.

In addition, in this interferometer, the movable flat mirror 2a is formed of the flat mirrors 2a₁, 2a₂ and the movable flat mirror 2b is formed of the flat mirrors 2b₁, 2b₂ in a chevron shape, respectively, and an incident angle and an angle of reflection of the reflected beam 5a and the transmitted beam 5b incident upon the flat mirrors 2a₁, 2b₁ are smaller than those in the interferometer according to said first preferred embodiment, so that a size of the interferometer in the direction, in which the beam splitter 4 and the fixed flat mirrors 6a, 6b stand side by side, can be reduced and thus the interferometer can be made compact.

In addition, also a roof-shaped mirror as shown in Fig. 3 can be used as the fixed flat mirrors 6a, 6b.

Also in this interferometer, since the reflected beam 5a and the transmitted beam 5b pass through the almost same space, the appearance of the noises resulting from the turbulence of air within the interferometer on the interferogram can be prevented.

Fig. 5 shows a third preferred embodiment of the invention.

Also in this third preferred embodiment, respective movable flat mirrors 2a, 2b fixedly standing on a swinging member 1 are constructed in a chevron shape and flat mirrors 2a₁, 2a₂ and flat mirrors 2b₁, 2b₂ composing said movable flat mirrors 2a, 2b, respectively, are opposite to the flat mirrors 2a₁, 2a₂, 2b₁, 2b₂ in the second preferred embodiment in tilting direction.

That is to say, the movable flat mirrors 2a, 2b are constructed so that an interval between both end sides may be smaller than that between central sides and said flat mirrors 2a₁, 2b₂ and said flat mirrors 2b₁, 2a₂ having the same tilting direction are parallel to each other, respectively.

Other constructions are same as in the second preferred embodiment shown in Fig. 4, so that they are designated by the same reference numerals.

Also the operation that the difference between the reflected beam 5a and the transmitted beam 5b in optical path length is produced and the both beams 5a, 5b are incident upon the beam splitter 4 again to produce the interference is same as in the interferometer according to the second preferred embodiment. And, also in this interferometer, since the reflected beam 5a and the transmitted beam 5b pass through the almost same space at the same time, the appearance of the noises resulting from the turbulence of air within the interferometer on the interferogram can be prevented.

Figs. 6 and 7 show a fourth preferred embodiment of the invention.

In this interferometer, a swinging member 1 is provided with movable flat mirrors 2a, 2b fixedly standing thereon oppositely at an interval, said movable flat mirrors 2a, 2b being relatively tilted so that an interval between end portions on the side of a fixedly positioned beam splitter 4 may be larger than that on the side of the other end.

And, fixed mirrors 6a, 6b, upon which a reflected beam 5a and a transmitted beam 5b emitted from said beam splitter 4 are incident through the movable flat mirrors 2a, 2b, and, which return them to the movable flat mirrors 2a, 2b, are constructed as a roof-shaped mirror shown said Fig. 3. Reference numeral 3 designates a light source and reference numeral 7 designates a shaft of which axis shaft line is parallel to a surface of the movable flat mirrors 2a, 2b. Reference numeral 8 designates a detector.

Also in this interferometer, a size in the direction, in which the beam splitter 4 and said fixed flat mirrors 6a, 6b stand side by side, can be reduced to small-size the interferometer.

An operation that a difference is produced between the reflected beam 5a and the transmitted beam 5b emitted from the beam transmitter 4 in optical path length to make both beam 5a, 5b incident upon the beam transmitter 4 again, whereby producing an interference, is same as in the interferometer according to the above described first preferred embodiment.

The fixed mirrors 6a, 6b composed of a roof-shaped mirror of this interferometer are installed so as to make coincide crest lines thereof with a height of optical axes. And, as shown for the fixed mirror 6a in Fig. 7, the incident reflected beam 5a is incident upon and then emitted from the opposite other surface, so that a tilting angle of an emitted beam V is same as that of an incident beam U even though for example said shaft 7 is shaked to tilt said incident beam U, as shown by a chain line and a broken line. Accordingly, said emitted beam V can be surely incident upon the beam splitter 4 again through the movable flat mirror 6a. This operation of the fixed mirror 6a is same also for the fixed mirror 6b. Accordingly, a support mechanism of the shaft 7 is easy in production and the like.

In addition, since the reflected beam 5a and the transmitted beam 5b pass through the almost same space at the same time, the appearance of the noises resulting from the turbulence of air on the interferogram can be prevented.

Fig. 8 shows a fifth preferred embodiment of the invention.

In this interferometer, a swinging member 1 is provided with movable flat mirrors 2a, 2b fixedly standing thereon and tilted to each other so that an interval between end portions on the side of a fixedly positioned beam splitter 4 may be smaller than that on the side of the other end.

Since other constructions are same as those in the interferometer according to the above described fourth preferred embodiment, they are designated by the same reference numerals as in Fig. 6.

And, also the operation that a difference is produced between the reflected beam 5a and the transmitted beam 5b in optical path length to make both beams 5a, 5b incident upon the beam splitter 4 again, whereby producing an interference and an operation for the turbulence of air are same as in the interferometer according to the above described fourth preferred embodiment.

Figs. 9 and 10 show a sixth preferred embodiment of the invention.

In this interferometer, a swinging member 1 is provided with a pair of movable flat mirrors 2a, 2b fixedly standing thereon oppositely in parallel to each other at an interval. Reference numeral 3 designates a light source, reference numeral 4 designates a fixedly positioned beam splitter 4 making a beam from said light source 3 incident upon said movable flat mirrors 2a, 2b, respectively, reference numeral 5a designates a reflected beam from said beam splitter 4, and reference numeral 5b designates a transmitted beam from the beam splitter 4.

Reference numerals 9a, 9b designate fixed polygon mirrors composed of a roof-shaped mirror, upon which said reflected beam 5a and said transmitted beam 5b from the movable flat mirrors 2a, 2b are separately incident on one surface thereof, and, from which the respective incident beams 5a, 5b are emitted toward the movable flat mirrors 2a, 2b on the other surface thereof. Accordingly, said fixed polygon mirrors 9a, 9b, as shown for the fixed polygon mirror 9a in Fig. 10, make the reflected beam 5a incident upon one surface of the fixed polygon mirror 9a and incident upon the other surface of the polygon mirror 9a again. From said last surface the reflected beam 5a is emitted, so that the beam incident upon the fixed polygon mirror 9a and the beam emitted from the fixed polygon mirror 9a are different in optical path. And, the fixed polygon mirrors 9a, 9b are arranged so that the respective optical paths of the beam incident thereupon and the beam emitted therefrom may stand side by side in the same direction as that in which the movable flat mirrors 2a, 2b stand, respectively.

Reference numerals 10a, 10b designate fixed mirrors each composed of one piece of flat mirror, upon which the reflected beam 5a and the transmitted beam 5b returned to the movable flat mirrors 2a, 2b from the fixed polygon mirrors 9a, 9b are separately incident, and which return the respective beams to the movable flat mirrors 2a, 2b again to be incident upon the beam splitter 4 again. Said fixed mirrors 10a, 10b are arranged not so as to overlap on the optical paths of the reflected beam 5a and the transmitted beam 5b emitted from or incident upon the beam splitter 4. Reference numeral 7 designates a shaft provided on said swinging member 1 in the same direction as that in which the movable flat mirrors 2a, 2b stand and reference numeral 8 designates a detector.

The basic construction of this interferometer is same as in the first preferred embodiment shown in Figs. 1 and 2. That is to say, the swinging member 1 is rotatably swung by a suitable angle of rotation, as shown by an arrow X-Y, to make the reflected beam 5a incident upon the movable flat mirror 2a and the transmitted beam 5b incident upon the movable flat mirror 2b. The reflected beam 5a and the transmitted beam 5b are incident upon the fixed polygon mirrors 9a, 9b through the movable flat mirrors 2a, 2b and then emitted from the fixed polygon mirrors 9a, 9b through optical paths different from the incident optical paths thereof (refer to Fig. 10).

The reflected beam 5a and the transmitted beam 5b incident upon the fixed mirrors 10a, 10b are returned to the fixed polygon mirrors 9a, 9b through the movable flat mirrors 2a, 2b and then incident upon the beam splitter 4 again through the movable flat mirrors 2a, 2b. Of the reflected beam 5a and the transmitted beam 5b incident upon the beam splitter 4 again, one is increased in optical path length while the other is reduced in optical path length by the rotational swing of the movable flat mirrors 2a, 2b, so that the joint of the reflected beam 5a with the transmitted beam 5b leads to an interference and thus an interferogram can be obtained by the rotatable swing of the movable flat mirrors 2a, 2b.

Since a change is produced between the reflected beam 5a and the transmitted beam 5b emitted from the beam splitter 4 and then incident upon the beam splitter 4 again in optical path length during the time when they are reciprocated two times between the movable flat mirrors 2a, 2b, provided that the swinging angle of the swinging member 1 is same, this optical path difference amounts to two times that in the respective interferometers according to the above described first to fifth preferred embodiments. Thus, a spectrum showing a higher resolution can be obtained.

And, since optical axes of the beams emitted from the movable flat mirrors 2a, 2b are always almost parallel to each other regardless of the shake of the shaft 7 and the like in the same manner as in the above described first preferred embodiment, the support mechanism is easy in production and the like and an interference can be always stably produced between the reflected beam 5a and the transmitted beam 5b. In addition, since the reflected beam 5a and the transmitted beam 5b pass through the almost same space, also the problem of the appearance of the noises resulting from the turbulence of air on the interferogram can be solved.

In addition, also a cube corner mirror composed of three pieces of flat mirror shown in Fig. 11 can be used as the fixed polygon mirrors 9a, 9b.

Another preferred embodiment of the above described driving device B will be below described.

Fig. 12 shows a seventh preferred embodiment of the invention.

Referring to Fig. 12, reference numeral 21a designates a first lever mounted on a shaft 22 at a base portion thereof. Said first lever 21a is supported on a pointed end of a support member 25 fixedly mounted on a top portion of a piezoelectric ceramics 23.

Reference numeral 24 designates a base on which said piezoelectric ceramics 23 is fixedly mounted. The first lever 21a and said shaft 22 may be fixed to each other or rotatable.

Reference numeral 28 designates a support member, a pointed end of which is smallsized, projecting from a working point of the lever 21a. Reference numeral 29 designates a second lever fixedly mounted on a shaft 30 at a base portion thereof, adapted to be rotated together with said shaft 30, supported on a pointed end of said support member 28, and energized toward the first lever 21a by means of a spring 26. Reference numeral 27 designates a power source connected with the piezoelectric ceramics 23.

And, for example the shaft 30 of the second lever 29 is directly or indirectly connected with the shaft 7 of the swinging member 1 of the two-beam interferometer shown in Fig. 1.

In order to reciprocally rotate the movable flat mirrors of the two-beam interferometer by means of this driving device B, the voltage is applied to the piezoelectric ceramics 23 to extend the piezoelectric ceramics 23, whereby rotating the first lever 21a. Since the support member 25 as said working point of the first lever 2 la rotatably pushes the second lever 29 again a force of said spring 26 by this rotation of the first lever 21a, also the shaft 30 is rotated at the same time.

Subsequently, upon removing the voltage from the piezoelectric ceramics 23, the piezoelectric ceramics 23 is contracted to the original condition and thus the spring 26 rotates the second lever 29 and the first lever 21a in a direction opposite to the above described one, so that also the shaft 30 is rotated at the same time. The movable flat mirrors of the two-beam interferometer are reciprocally rotated by the reciprocal rotation of the shaft 30 resulting from this rotation of the second lever 29.

And, in this preferred embodiment, since the second lever 29 is swung by swinging the first lever 21a, a rotating distance is increased corresponding to a length of the first lever 21a, so that an angle of rotation of the second lever 29 and the shaft 30 can be increased and thus the swinging angle of the movable flat mirrors of the two-beam interferometer can be increased.

Fig. 13 shows an eighth preferred embodiment of the invention.

In this eighth preferred embodiment, a first lever 21a is connected with a second lever 29 through an elastically deformable sheet-like connecting piece 31 such as a plate spring. Since other constructions are same as in said seventh preferred embodiment shown in Fig. 12, they are designated by the same reference numerals as in the seventh preferred embodiment.

Also in this driving device B, the movable flat mirrors of the two-beam interferometer are reciprocally rotated by means of the shaft 30 in the same manner as in the seventh preferred embodiment.

Fig. 14 shows a ninth preferred embodiment of the invention.

Referring to Fig. 14, reference numeral 21 designates a lever fixedly mounted on a shaft 22 at an end portion thereof. Reference numeral 23 designates a piezoelectric ceramics fixedly mounted on a base 24. Reference numeral 32 designates a fitting member fixedly mounted on a top portion of said piezoelectric ceramics 23. A sheet-like connecting piece 33 formed of a plate spring is fixedly mounted on said fitting member 32 at an end portion thereof so as to stand on the piezoelectric ceramics 23 in almost parallel to a direction in which the piezoelectric ceramics 23 stands. And, said sheet-like connecting piece 33 is fixedly mounted at a position far from said shaft 22 of said lever 21 at the other end thereof so that a surface thereof may be parallel to an axis shaft line of the shaft 22 and the lever 21 is integrally connected with the piezoelectric ceramics 23. Reference numeral 27 designates a power source.

Also in this driving device B, the shaft 22 is directly or indirectly connected with the shaft 7 of the swinging member 1. And, since the lever 21 is connected with the piezoelectric ceramics 23 through the sheet-like connecting piece 33 in the above described manner, upon applying the voltage to and removing the voltage from the piezoelectric ceramics 23, the piezoelectric ceramics 23 is extended and contracted and its dislocation is directly and immediately transmitted to the shaft 22 through the sheet-like connecting piece 33 to reciprocally rotate the shaft 22. The movable flat mirrors of the two-beam interferometer are rotated by this rotation of the shaft 22.

And, since the sheet-like connecting piece 33 is relatively easily deformed in the direction of thickness but rigid in the direction parallel to a surface thereof, every dislocation of the extension and contraction of the piezoelectric ceramics 23 can be immediately and surely transmitted to the lever 21 under the same conditions. In addition, since the dislocation of the lever 21 is absorbed by the elastic deformation of the sheet-like connecting piece 33 in the direction of thickness by the linear extension and contraction of the piezoelectric ceramics 23, the lever 21 can be smoothly rotated by the extension and contraction of the piezoelectric ceramics 23.

Accordingly, the movable flat mirrors of the two-beam interferometer can be always accurately reciprocally rotated to easily control the optical path difference between the reflected beam and the transmitted beam produced in a unit time constant.

Furthermore, the fitting member 32 may be formed integrally with the sheet-like connecting piece 33.

Fig. 15 shows a tenth preferred embodiment of the invention.

Referring to Fig. 15, reference numeral 21a designates a first lever supported on a shaft 22 at a base thereof. Reference numeral 23 designates a piezoelectric ceramics fixedly mounted on a base 24. Reference numeral 29 designates a second lever fixedly mounted on a shaft 30 at a base portion thereof Reference numeral 32 designates a fitting member fixedly mounted on a top portion of said piezoelectric ceramics 23 and provided with a first sheet-like connecting piece 33a formed of a plate spring fixedly standing thereon. And, said first sheet-like connecting piece 33a is fixed at a position far from said shaft 22 at the other end thereof so that a surface thereof may be parallel to an axis shaft line of the shaft 22.

Reference numeral 34 designates a second sheet-like connecting piece formed of a plate spring fixed at a working point of said first lever 21a and a position far from said shaft 30 of said second lever 29 at the respective end portions thereof for connecting the first lever 21a with the second lever 29. A surface of said second sheet-like connecting piece 34 is arranged so as to be parallel to an axis shaft line of the shaft 30. Reference numeral 27 designates a power source.

In this driving device B, the movable flat mirrors of the two-beam interferometer are reciprocally rotated by means of the shaft 30 of the second lever 29.

In order to rotate the movable flat mirrors of the two-beam interferometer, the piezoelectric ceramics 23 is extended and contracted to reciprocally rotate the first lever 21a and the second lever 29 at the same time, whereby rotatably swinging the movable flat mirrors.

In the two-beam interferometer for use in the Fourier transform spectrometer according to the present invention, as above described, the swinging member is provided with a pair of movable flat mirrors fixedly standing thereon oppositely and a pair of movable flat mirrors are rotatably swung by the appointed angle through the swinging member to reflect the reflected beam and the transmitted beam from the beam splitter between a pair of movable flat mirrors, respectively, and then make them separately incident upon the fixed mirror followed by making the respective beams joinedly incident upon the beam splitter again through the respective movable flat mirrors, whereby producing the interference.

Accordingly, since, of the respective optical paths of the reflected beam and transmitted beam, one is lengthened while the other is shortened to produce a difference between them by the rotatable swing of a pair of movable flat mirrors, the difference between both optical paths in length can be increased to 2 times that in the case where the optical path length of one beam is changed.

And, since the reflected beam and the transmitted beam from the beam splitter pass through the almost same space between the fixedly standing movable flat mirrors at the same time, the turbulences produced on the wave surfaces of both beams resulting from the turbulence of air in the event that air is turbulent are almost same. Accordingly, when the reflected beam and the transmitted beam are joinedly incident upon the beam splitter again, the turbulences of the respective wave surfaces are almost perfectly denated with each other, so that the appearance of the partially remained turbulence of the wave surface as the noises on the interferogram by the Fourier transform spectrometer can be almost perfectly prevented.

Furthermore, since the interferometers may contain a pair of movable flat mirrors which are arranged in parallel to each other, not only the optical axes of the beams incident upon the fixed mirrors from the respective movable flat mirrors are always almost parallel to each other regardless of the swinging angle of the swinging member but also the optical axes of the beams emitted from the respective movable flat mirrors are almost parallel to each other likewise even though the axis shaft line of the swinging member is shifted. Accordingly, since it is unnecessary to in particular heighten the accuracy of the support mechanism of the swinging member, not only the cost can be reduced but also the reflected beam and the transmitted beam emitted from the beam splitter can be reflected by a pair of movable flat mirrors and fixed mirrors to always surely make them joinedly incident upon the beam splitter again, whereby producing the interference.

And, if a pair of movable flat mirrors are constructed in a chevron shape so that the interval therebetween on the both end sides may be larger than that on the central side and a pair of movable flat mirrors are arranged so that the interval between ends on the side of the beam splitter may be larger than that between the other ends, the incident angle and the angle of reflection of the reflected beam and the transmitted beam for the respective movable flat mirrors become smaller than those in the interferometer according to the first embodiment, so that the size in the direction, in which the beam splitter and the fixed flat mirrors stand side by side, can be reduced to make the interferometer compact.

In addition, in the interferometer according to the sixth embodiment, since the reflected beam and the transmitted beam are reciprocated between a pair of movable flat mirrors 2 times and then incident upon the beam splitter again, provided that the rotatable swinging angle of the swinging member is same, the difference between the respective optical paths of the reflected beam and the transmitted beam in length can be increased to two times that in the interferometer according to the first embodiment. Accordingly, the spectrum exhibiting the higher resolution can be obtained.

In addition, in all of the driving devices for the movable flat mirrors in the two-beam interferometer according to the present invention, as above described, the lever is reciprocally rotated by means of the linearly extending and contracting piezoelectric ceramics to rotate the shaft or the movable flat mirrors of the two-beam interferometer by means of the lever.

Accordingly, not only the consumption volume of electric power can be reduced but also the driving device can be made compact as a whole, so that also the space required for the installation of the driving device can be reduced.

Moreover, as described above, the movable flat mirrors in the two-beam interferometer are rotated. The shafts of the movable flat mirrors may be rotated together with a lever and a piezoelectric ceramics is connected with the lever through an elastically deformable sheet-like connecting piece fixedly mounted thereon at the respective end portions. Furthermore, the piezoelectric ceramics may be integrally connected with a first lever through a first sheet-like connecting piece, the first lever being integrally connected with a second lever through a second sheet-like connecting piece, the second lever being rotated together with a shaft, and the movable flat mirrors in the two-beam interferometer being driven by means of this shaft.

And, since the respective sheet-like connecting pieces are relatively easily elastically deformable in the direction of thickness but rigid in the direction parallel to the surface thereof, every dislocation in the extension and contraction of the piezoelectric ceramics can be immediately and surely transmitted to the respective levers under the same conditions. In addition, by the linear extension and contraction of the piezoelectric ceramics, the dislocations of the respective rotating levers and the dislocation resulting from the simultaneous rotation of the first lever and the second lever are absorbed by the elastic deformation of the respective sheet-like connecting pieces in the direction of thickness, so that the respective levers can be smoothly rotated by the extension and contraction of the piezoelectric ceramics.

Accordingly, not only the respective dislocations in the extension and contraction of the piezoelectric ceramics can be immediately and surely transmitted to the lever or the first lever and the second lever to rotate the respective shafts driving the movable flat mirrors in the two-beam interferometer but also the movable flat mirrors in the two-beam interferometer can be always accurately reciprocally rotated to easily control the optical path difference between the reflected beam and the transmitted beam produced in a unit time constant since the secondary delay is not produced in the rotation of the lever or the respective rotations of the first lever and the second lever.

Besides, the angle of rotation of the second lever may be amplified by means of the first lever to increase the angle of rotation of the shaft of the second lever, so that the correspondence to the swinging angle of the movable flat mirrors in the two-beam interferometer can be easily achieved.

## Claims

1. A two-beam interferometer for use in a Fourier transform spectrometer comprising:
- a light source (3) emitting a light beam;
- a detector (8) receiving light beams;
- a swinging member (1) provided with a first movable flat mirror (2a) and a second movable flat mirror (2b) fixed to it, said swinging member (1) being adapted to be rotatably swung around an axis in which said first and second flat mirrors (2a, 2b) extend;
- a beam splitter (4) partially reflecting said beam as a reflected beam (5a) towards said first movable flat mirror (2a), and for partially transmitting said emitted beam as a transmitted beam (5b) towards said second movable flat mirror (2b);
- a first fixed mirror (6a; 9a) for reflecting said reflected beam (5a); and
- a second fixed mirror (6b; 9b) for reflecting said transmitted beam (5b);
characterised in that all mirrors are arranged so that
- the reflected beam (5a) is reflected from said first movable flat mirror (2a) in the following sequence: first movable flat mirror (2a) - second movable flat mirror (2b) - first fixed mirror (6a; 9a) - second movable flat mirror (2b) - first movable flat mirror (2a), and from there towards the beam splitter (4); and
- the transmitted beam (5b) is reflected from said second movable flat mirror (2b) in the following sequence: second movable flat mirror (2b) - first movable flat mirror (2a) - second fixed mirror (6b; 9b) - first movable flat mirror (2a) - second movable flat mirror (2b), and from there towards the beam splitter (4).

2. A two-beam interferometer according to claim 1, characterised in that said first and second movable flat mirrors (2a, 2b) are arranged in parallel.

3. A two-beam interferometer according to claim 1, characterised in that said first and second movable flat mirrors (2a, 2b) have chevron form with intervals between the respective end portions on the side of the beam splitter (4) and on the side of the fixed mirrors (6a, 6b), respectively, which are, depending on their selection, larger or smaller than the interval at their centers.

4. A two-beam interferometer according to claim 1, characterised in that said first and second movable flat mirrors (2a, 2b) are mutually inclined against each other so that they are opposite to each other at an interval which is between the end portions of said mirrors on the side of said beam splitter (4) larger or smaller, depending on the selection, than the interval on the side of the other end portions.

5. A two-beam interferometer according to one of the preceding claims, characterised in that said fixed mirrors are fixed polygon mirrors (6a, 6b; 9a, 9b) in which an upper leg receives the beam coming from the associated movable flat mirror (2a or 2b, respectively) in an upper plane, and reflects it to a lower leg from where it is reflected back again in a lower plane to the said associated movable flat mirror essentially parallel to the upper beam received from there.

6. A two-beam interferometer according to one of the preceding claims, characterised in that the reflected beam (5a) is, when returning towards the beam splitter (4), transmitted through the beam splitter to the detector (8), and the transmitted beam (5b) is, when returning towards the beam splitter, reflected by the beam splitter onto the detector (8).

7. A two-beam interferometer according to claim 5, further characterised in that it additionally comprises a third fixed mirror (10a) allocated to the reflected beam (5a) and being arranged in the path of the lower reflected beam which returns towards said beam splitter (4) in said lower plane, after it was reflected a first time at said first fixed mirror (9a), at which third fixed mirror said lower reflected beam is reflected again as an upper reflected beam towards the first movable flat mirror to again follow the same sequence of reflections as before, after which reflections it returns towards the beam splitter again in the upper plane, and which correspondingly comprises a fourth fixed mirror (10b) provided for the transmitted beam (5b).

8. A driving device for driving the shaft (7) of a swinging member (1) provided with a pair of movable flat mirrors (2a, 2b) in a two-beam interferometer for use in a two-beam interferometer according to one of the preceding claims, characterised by
- a lever (21; 21a) rotatably driving directly or indirectly said shaft (7) of said switching member;
- a piezoelectric ceramics (23) actuating on said lever (21; 21a) at a position far from the rotational shaft (22) of said lever to rotate said lever in a first direction when being driven to increase its length; and
- a means (26; 33) to rotate said lever in a second direction opposite to said first direction, when said piezoelectric ceramics is driven to decrease its length.

9. A driving device according to claim 8, further characterised in comprising a second lever (29) supported by a second shaft (30) driving the shaft of said switching member (1), said second lever being actuated by said first lever (21a) to rotate in said first direction when said first lever rotates in said first direction, and comprising a means (26; 34) for rotating said second lever in said second direction when said first lever rotates in said second direction.

10. A driving device according to claim 8 or claim 9, characterised in that said means for rotating said first lever (21; 21a) and/or said second lever (29) in said second direction is an energizing means (26) for energizing the lever or the levers, respectively, towards said piezoelectric ceramics (23).

11. A driving device according to claim 8 or claim 9, characterised in that said means for rotating said first lever (21; 21a) and/or said second lever (29) in said second direction is a first elastically deformable sheet-like connecting piece (33) fixedly mounted between said first lever (21; 21a) and said piezoelectric ceramics (23), and/or a second elastically deformable sheet-like connecting piece (31; 34) fixedly mounted between said second lever (29) and said first lever (21a).

## Patentansprüche

1. Zweistrahl-Interferometer zur Verwendung in einem Spektrometer mit Fourier-Transformation, mit:
- einer einen Lichtstrahl emittierenden Lichtquelle (3);
- einem Lichtstrahlen empfangenden Detektor (8);
- einem Schwingteil (1), das mit einem ersten verstellbaren Planspiegel (2a) und einem zweiten verstellbaren Planspiegel (2b) versehen ist, die an ihm befestigt sind, und das so ausgebildet ist, daß es drehend um eine Achse schwingt, in der sich der erste und der zweite Planspiegel (2a, 2b) erstrecken;
- einem Strahlteiler (4), der diesen Strahl teilweise als reflektierten Strahl (5a) zum ersten verstellbaren Planspiegel (2a) reflektiert, und der diesen emittierten Strahl teilweise als transmittierten Strahl (5b) zum zweiten verstellbaren Planspiegel (2b) durchläßt;
- einem ersten feststehenden Spiegel (6a; 9a) zum Reflektieren des reflektierten Strahls (5a) und
- einem zweiten feststehenden Spiegel (6b; 9b) zum Reflektieren des transmittierten Strahls (5b);
**dadurch gekennzeichnet**, daß alle Spiegel so ausgebildet sind, daß
- der reflektierte Strahl (5a) vom ersten verstellbaren Planspiegel (2a) in der folgenden Reihenfolge reflektiert wird: erster verstellbarer Planspiegel (2a) - zweiter verstellbarer Planspiegel (2b) - erster feststehender Spiegel (6a; 9a) - zweiter verstellbarer Planspiegel (2b) - erster verstellbarer Planspiegel (2a) und von dort zum Strahlteiler (4); und
- der transmittierte Strahl (5b) vom zweiten verstellbaren Planspiegel (2b) in der folgenden Reihenfolge reflektiert wird: zweiter verstellbarer Planspiegel (2b) - erster verstellbarer Planspiegel (2a) - zweiter feststehender Spiegel (6b; 9b) - erster verstellbarer Planspiegel (2a) - zweiter verstellbarer Planspiegel (2b) und von dort zum Strahlteiler (4).

2. Zweistrahl-Interferometer nach Anspruch 1, **dadurch gekennzeichnet**, daß der erste und der zweite verstellbare Planspiegel (2a, 2b) parallel zueinander angeordnet sind.

3. Zweistrahl-Interferometer nach Anspruch 1, **dadurch gekennzeichnet**, daß der erste und der zweite verstellbare Planspiegel (2a, 2b) Winkelform haben, wobei die Abstände zwischen den jeweiligen Endabschnitten auf der Seite des Strahlteilers (4) bzw. auf der Seite der feststehenden Spiegel (6a, 6b) abhängig von der jeweiligen Wahl größer oder kleiner als der Abstand in ihren Mitten sind.

4. Zweistrahl-Interferometer nach Anspruch 1, **dadurch gekennzeichnet**, daß der erste und der zweite verstellbare Planspiegel (2a, 2b) so gegeneinander geneigt sind, daß sie mit einem Abstand einander gegenüberstehen, der zwischen den Endabschnitten der Spiegel auf der Seite des Strahlteilers (4) größer oder kleiner, abhängig von der jeweiligen Wahl, ist als der Abstand auf der Seite der anderen Endabschnitte.

5. Zweistrahl-Interferometer nach einem der vorstehenden Ansprüche, **dadurch gekennzeichnet**, daß die feststehenden Spiegel feststehende Polygonspiegel (6a, 6b; 9a, 9b) sind, bei denen ein oberer Schenkel den vom zugeordneten verstellbaren Planspiegel (2a bzw. 2b) herkommenden Strahl in einer oberen Ebene empfängt und ihn zu einem unteren Schenkel reflektiert, wo er erneut in einer unteren Ebene zum zugeordneten verstellbaren Planspiegel im wesentlichen parallel zum oberen Strahl reflektiert wird, der von dort empfangen wird.

6. Zweistrahl-Interferometer nach einem der vorstehenden Ansprüche, **dadurch gekennzeichnet**, daß der reflektierte Strahl (5a) dann, wenn er zum Strahlteiler (4) zurückgeführt wird, durch den Strahlteiler zum Detektor (8) hindurchgestrahlt wird und daß der transmittierte Strahl (5b) dann, wenn er zum Strahlteiler zurückkehrt, vom Strahlteiler auf den Detektor (8) reflektiert wird.

7. Zweistrahl-Interferometer nach Anspruch 5, ferner **dadurch gekennzeichnet**, daß es zusätzlich einen dritten feststehenden Spiegel (10a) aufweist, der dem reflektierten Strahl (5a) zugeordnet ist und im Pfad des unteren reflektierten Strahls angeordnet ist, der zum Strahlteiler (4) in der unteren Ebene zurückkehrt, nachdem er erstmals am ersten feststehenden Spiegel (9a) reflektiert wurde, an welchem dritten feststehenden Spiegel dieser untere reflektierte Strahl erneut als oberer reflektierter Strahl zum ersten verstellbaren Planspiegel reflektiert wird, um erneut derselben Folge von Reflexionen wie zuvor zu folgen, nach welchen Reflexionen er erneut in der oberen Ebene zum Strahlteiler zurückkehrt, und das entsprechend einen vierten feststehenden Spiegel (10b) aufweist, der für den transmittierten Strahl (5b) vorhanden ist.

8. Antriebsvorrichtung zum Antreiben der Welle (7) eines Schwingteils (1), das mit einem Paar verstellbarer Planspiegel (2a, 2b) in einem Zweistrahl-Interferometer zur Verwendung in einem Zweistrahl-Interferometer gemäß einem der vorstehenden Ansprüche versehen ist, **gekennzeichnet durch**
- einen Hebel (21; 21a), der drehend direkt oder indirekt die Welle (7) des Schwingteils antreibt;
- eine Piezokeramik (23), die den Hebel (21; 21a) an einer Position entfernt von der Drehwelle (22) des Hebels antreibt, um den Hebel in einer ersten Richtung zu verdrehen, wenn sie so angesteuert wird, daß sie ihre Länge vergrößert; und
- eine Einrichtung (26; 33) zum Verdrehen des Hebels in einer zweiten Richtung entgegengesetzt zur ersten Richtung, wenn die Piezokeramik so angesteuert wird, daß sie ihre Länge verringert.

9. Antriebsvorrichtung nach Anspruch 8, ferner **dadurch gekennzeichnet**, daß sie einen zweiten Hebel (29) aufweist, der von einer zweiten Welle (30) gehalten wird, die die Welle des Schwingteils (1) antreibt, wobei der zweite Hebel vom ersten Hebel (21a) angetrieben wird, um sich in dieser ersten Richtung zu drehen, wenn sich der erste Hebel in der ersten Richtung dreht, und mit einer Einrichtung (26; 24) zum Verdrehen des zweiten Hebels in der zweiten Richtung, wenn sich der erste Hebel in der zweiten Richtung verdreht.

10. Antriebsvorrichtung nach Anspruch 8 oder Anspruch 9, **dadurch gekennzeichnet**, daß die Einrichtung zum Verdrehen des ersten Hebels (21; 21a) und/oder des zweiten Hebels (29) in der zweiten Richtung eine Betätigungseinrichtung (26) zum Drücken des Hebels bzw. der Hebel auf die Piezokeramik (23) hin ist.

11. Antriebsvorrichtung nach Anspruch 8 oder Anspruch 9, **dadurch gekennzeichnet**, daß die Einrichtung zum Verdrehen des ersten Hebels (21; 21a) und/oder des zweiten Hebels (29) in der zweiten Richtung ein erstes elastisch verformbares, blattähnliches Verbindungsteil (33) ist, das fest zwischen den ersten Hebel (21; 21a) und die Piezokeramik (23) montiert ist, und/oder sie ein zweites elastisch verformbares, blattähnliches Verbindungsteil (31; 34) ist, das fest zwischen den zweiten Hebel (29) und den ersten Hebel (21a) montiert ist.

## Revendications

1. Un interféromètre à double faisceau destiné à être utilisé dans un spectromètre à transformer de Fourier, comprenant:
- une source lumineuse (3) émettant un faisceau lumineux;
- un capteur (8) recevant des faisceaux lumineux;
- un organe oscillant (1) muni d'un premier miroir plan mobile (2a) et d'un deuxième miroir plan mobile (2b) fixé sur celui-ci, ledit organe oscillant (1) étant susceptible d'osciller de façon rotative autour d'un axe selon lequel s'étend ledit premier et ledit second miroirs plans (2a, 2b);
- un diviseur de faisceau (4) réfléchissant partiellement ledit faisceau sous forme de faisceau réfléchi (5a) vers ledit premier miroir plan mobile (2a), et transmettant partiellement ledit faisceau émis, en tant que faisceau transmis (5b) vers ledit deuxième miroir plan mobile (2b);
- un premier miroir fixe (6a; 9a) pour réfléchir ledit faisceau réfléchi (5a); et
- un deuxième miroir fixe (6b; 9b) pour réfléchir ledit faisceau transmis (5b);
caractérisé en ce que tous les miroirs sont disposés de telle sorte que :
- le faisceau réfléchi (5a) soit réfléchi à partir dudit premier miroir plan mobile (2a) selon la séquence suivante:
. premier miroir plan mobile (2a),
. deuxième miroir plan mobile (2b),
. premier miroir fixe (6a; 9a),
. deuxième miroir plan mobile (2b),
. premier miroir plan mobile (2a), et de là vers le diviseur de faisceau (4); et
- le faisceau transmis (5b) soit réfléchi à partir dudit deuxième miroir plan mobile (2b) selon la séquence suivante:
. deuxième miroir plan mobile (2b),
. premier miroir plan mobile (2a),
. deuxième miroir fixe (6b; 9b),
. premier miroir plan mobile (2a),
. deuxième miroir plan mobile (2b), et de là vers le diviseur de faisceau (4).

2. Un interféromètre à double faisceau selon la revendication 1, caractérisé en ce que lesdits premier et deuxième miroirs plans mobiles (2a, 2b) sont disposés en parallèle.

3. Un interféromètre à double faisceau selon la revendication 1, caractérisé en ce que lesdits premier et deuxième miroirs plans mobiles (2a, 2b) ont la forme d'un chevron avec des intervalles entre les parties d'extrémité respectives du côté du diviseur de faisceau (4) et, respectivement, du côté des miroirs fixes (6a, 6b) qui sont, selon le choix, plus grands ou plus petits à l'intervalle à leurs centres.

4. Un interféromètre à double faisceau selon la revendication 1, caractérisé en ce que lesdits premier et deuxième miroirs plans mobiles (2a, 2b) sont inclinés mutuellement l'un par rapport à l'autre afin de se trouver en face l'un de l'autre à un intervalle qui, entre les parties d'extrémité desdits miroirs du côté dudit diviseur de faisceau (4), est supérieur ou inférieur, en fonction du choix, à l'intervalle du côté des autres parties d'extrémité.

5. Un interféromètre à double faisceau selon l'une des revendications précédentes, caractérisé en ce que lesdits miroirs fixes sont des miroirs fixes de forme polygonale (6a, 6b; 9a, 9b) dont une partie supérieure reçoit le faisceau originaire du miroir plan mobile associé (2a ou 2b) respectivement dans un plan supérieur, en le réfléchissant vers une partie inférieure où il est de nouveau réfléchi, dans un plan inférieur, vers ledit miroir plan mobile associé, essentiellement parallèle au faisceau supérieur reçu dudit miroir.

6. Un interféromètre à double faisceau selon l'une des revendications précédentes, caractérisé en ce que ledit faisceau réfléchi (5a) est, lors de son retour vers le diviseur de faisceau (4) transmis à travers le diviseur de faisceau au détecteur (8), le faisceau transmis (5b), pendant son retour vers le diviseur de faisceau, étant réfléchi par le diviseur de faisceau sur le détecteur (8).

7. Un interféromètre à double faisceau selon la revendication 5, caractérisé en ce qu'il comprend en outre un troisième miroir fixe (10a) affecté au faisceau réfléchi (5a), et étant agencé sur le trajet du faisceau réfléchi inférieur revenant vers ledit diviseur de faisceau (4) selon ledit plan inférieur après une première réflexion audit premier miroir fixe (9a), ledit faisceau réfléchi inférieur étant de nouveau réfléchi sur ce troisième miroir fixe pour constituer un faisceau réfléchi supérieur vers le premier miroir plan mobile pour poursuivre ensuite la même séquence de réflexion qu'avant, et pour revenir, après ces réflexions, vers le diviseur de faisceau, de nouveau dans le plan supérieur, et qui comprend en conséquence un quatrième miroir fixe (10b) prévu pour le faisceau transmis (5b).

8. Un dispositif d'entraînement pour entraîner l'arbre (7) d'un organe oscillant (1) muni d'une paire de miroirs plans mobiles (2a, 2b) dans un interféromètre à double faisceau pour utilisation dans un interféromètre à double faisceau selon l'une des revendications précédentes, caractérisé par:
- un levier (21: 21a) pour l'entraîneemnt direct ou indirect dudit arbre (7) dudit organe de commutation;
- une céramique piézoélectrique (23) agissant sur ledit levier (21; 21a) à une position éloignée de l'arbre de rotation (22) dudit levier, afin de faire tourner ledit levier selon une première direction quand il est piloté de façon à augmenter sa longueur ; et
- des moyens (26; 33) pour faire tourner ledit levier dans une deuxième direction à l'opposé de ladite première direction, quand ledit élément piézoélectrique est piloté afin de diminuer sa longueur.

9. Un dispositif d'entraînement selon la revendication 8, caractérisé en outre en ce qu'il comprend un deuxièime levier (29) supporté par un deuxième arbre (30) pour entraîner l'arbre dudit organe de commutation (1), ledit deuxième levier étant activé par ledit premier levier (21a) afin de subir une rotation dans ladite première direction quand ledit premier levier tourne selon ladite première direction, et comprenant des moyens (26; 34) pour faire tourner ledit deuxième levier selon ladite deuxième direction quand ledit premier levier tourne selon ladite deuxième direction.

10. Un dispositif d'entraînement selon la revendication 8 ou la revendication 9, caractérisé en ce que lesdits moyens pour faire tourner ledit premier levier (21; 21a) et/ou ledit deuxième levier (29) selon ladite deuxième direction comprennent des moyens d'excitation (26) pour exciter le levier ou, respectivement, les leviers, vers ladite céramique piézoélectrique (23).

11. Un dispositif d'entraînement selon la revendication 8 ou la revendication 9, caractérisé en ce que lesdits moyens pour faire tourner ledit premier levier (21; 21a) et/ou ledit deuxième levier (29) selon ladite deuxième direction comprennent un premier organe de raccordement déformable élastiquement en forme de feuille (33) monté rigidement entre ledit premier levier (21; 21a) et ladite céramique piézoélectrique (23) et/ou un deuxième organe de raccordement déformable élastiquement en forme de feuille (31; 34) monté rigidement entre ledit deuxième levier (29) et ledit premier levier (21a).
